# EUROPÄISCHE PATENTSCHRIFT

(11) **EP 4 677 256 B1**
(45) Veröffentlichungstag und Bekanntmachung des Hinweises auf die Patenterteilung: **18.11.2026**
(21) Anmeldenummer: 24708133.4
(22) Anmeldetag: 21.02.2024
(51) Int. Cl.: F17C 5/00, F17C 5/06

(54) **VERFAHREN ZUM BESTIMMEN EINER GRÖSSE EINES TANKS**
METHOD FOR DETERMINING A SIZE OF A TANK
PROCÉDÉ DE DÉTERMINATION D'UNE TAILLE D'UN RÉSERVOIR

(30) Priorität: 03.03.2023 EP 23020103
(43) Veröffentlichungstag der Anmeldung: 14.01.2026
(73) Patentinhaber: Linde GmbH, 82049 Pullach (DE)
(72) Erfinder: Jury, Georg, 82049 Pullach (DE); Vidic, Karl Jojo, 82049 Pullach (DE)
(74) Vertreter: Zahn, Christoph
(86) Internationale Anmeldenummer: PCT/EP2024/025082
(87) Internationale Veröffentlichungsnummer: WO 2024/183947

(56) Entgegenhaltungen:
- EP-A1- 2 696 127
- AU-A1- 2021 293 617
- DE-T5- 112017 001 338
- JP-A- 2021 173 332
- US-A1- 2012 267 002
- US-A1- 2017 074 456
- US-A1- 2019 301 678

## Beschreibung

Die Erfindung betrifft ein Verfahren zum Bestimmen einer Größe eines Tanks, der mit Medium, insbesondere Wasserstoff, zu befüllen ist, z.B. im Rahmen eines Betankungsvorgangs. Die Erfindung betrifft auch ein Rechensystem zur Durchführung des Verfahrens, sowie eine entsprechende Anlage, insbesondere eine Wasserstofftankstelle.

Wasserstoff kann als Treibstoff für unterschiedliche Fahrzeuge verwendet werden. Damit ein Fahrzeug mit Wasserstoff betrieben werden kann, kann dieser z.B. in Tanks bei einem Druck zwischen 300 und 1000 bar im Fahrzeug gespeichert werden. Die Befüllung des Tanks erfolgt in der Regel gemäß einem Protokoll, einem sog. Befüllungsprotokoll oder Betankungsprotokoll, um so die Sicherheit zu gewährleisten, dass also z.B. einerseits eine maximal zulässige Temperatur und/oder ein maximal zulässiger Druck im Tank nicht überschritten werden.

Um solche Protokoll einhalten zu können, zudem aber z.B. die Betankungszeit so kurz wie möglich zu halten, ist es in der Regel erforderlich, die Größe des Tanks zumindest in etwa zu kennen. Insbesondere beim Befüllen eines Tanks mit Gas hängen die Größen bei der Befüllung nämlich auch von der Größe des Tanks ab.

Aus der US 2012/267002 A1 ist ein Verfahren zum Bestimmen der Größe eines mit einem Medium, beispielsweise Wasserstoff zu befüllenden Tanks bekannt.

Vor diesem Hintergrund stellt sich die Aufgabe, eine alternative Möglichkeit für eine Bestimmung einer Größe eines Tanks, der mit Medium wie Wasserstoff, zu befüllen ist, anzugeben.

### Offenbarung der Erfindung

Diese Aufgabe wird durch ein zum Bestimmen einer Größe eines Tanks, ein Rechensystem sowie eine Anlage mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich allgemein mit dem zum Befüllen eines Tanks mit Medium, insbesondere Wasserstoff. Insbesondere betrifft die Erfindung aber das Bestimmen einer Größe eines solchen Tanks, z.B. eines Fahrzeugs im Zusammenhang mit dem Befüllen. Das Befüllen (oder Betanken) selbst kann z.B., wie schon erwähnt, gemäß einem Befüllungsprotokoll (oder Betankungsprotokoll) erfolgen, wobei das Befüllungsprotokoll z.B. mehrere Vorgaben für eine oder mehrere Größen, die das Medium und/oder eine Förderung des Mediums beim Befüllen charakterisieren, umfasst. Wenngleich die Erfindung vorwiegend in Bezug auf Wasserstoff als Medium und einem Betankungsvorgang bei einer Wasserstofftankstelle beschrieben wird, so kann die Erfindung gleichermaßen auf Tanks bzw. das Befüllen des Tanks mit einem anderen Medium, insbesondere einem Gas oder verflüssigten Gas, angewendet werden.

Um wasserstoffbetriebene Fahrzeuge gemäß dem auf den jeweiligen Tank bzw. das jeweilige Tanksystem zugeschnittenen Betankungsprotokollen zu befüllen, muss in der Regel sichergestellt sein, dass das zu befüllende Tanksystem im Rahmen des Betankungsprozess (bzw. Befüllungsvorgangs) am Dispenser der Wasserstofftankstelle möglichst automatisch erkannt und identifiziert wird. Dies sollte insbesondere sicherheitsgerichtet nach SIL-2 (SIL steht für "Safety Integrity Level" und gibt eines Sicherheitsstufe an) erfolgen, da es im Falle eines falsch erkannten Tanksystems und daher eines falsch ausgewählten Befüllungsprotokolls z.B. zu einer Tanküberhitzung oder Überfüllung mit Personenschaden kommen kann.

Typische Fahrzeuge können zwar über eine Datenschnittstelle wie z.B. eine Infrarotschnittstelle verfügen; diese Datenschnittstelle ist in der Regel jedoch nicht SIL-2-fähig, um ein SIL-2-Signal auszugeben, das am Dispenser eine Bestimmung der Größe des Tanks bzw. der Tanksystemgröße mit ausreichender Sicherheit zulässt, die maßgeblich für das zu wählende Betankungsprotokoll ist. Eine Möglichkeit, damit umzugehen, ist, die betroffenen Fahrzeuge fallweise nur unverhältnismäßig langsam mit dem sog. "most conservative Ansatz" aus der SAE J2601 zu betanken. Das bedeutet, dass auch, wenn das Tanksystem an sich eine schnellere Betankung zulassen würde, immer nur die langsamste aller möglichen Druckrampen aus der SAE J2601zur Fahrzeuqbefüllunq herangezogen werden darf.

Vor diesem Hintergrund wird ein Verfahren zum Bestimmen einer Größe des Tanks (Tankgröße), der mit dem Medium wie Wasserstoff befüllt werden soll, vorgeschlagen. Unter einer Größe des Tanks soll dabei insbesondere das Volumen des Tanks verstanden werden, und zwar z.B. auch inkl. etwaiger Zuleitungen, beispielsweise eine Zuleitung von einer Tankstutzenkupplung am Fahrzeug zum eigentlichen Tank. Es sei auch erwähnt, dass die Größe des Tanks auch anders definiert werden kann, z.B. über eine Massenangabe, bei der dann für ein bestimmtes Medium bestimmte Werte für bestimmte Parameter gelten. So kann ein Tank mit einem Volumen von 50l z.B. 2kg an Wasserstoff und gewissen Bedingungen für Druck und Temperatur aufnehmen. Weiterhin sei erwähnt, dass das Bestimmen der Größe eines Tanks nicht notwendigerweise das Bestimmen eines konkreten Werts für z.B. das Volumen des Tanks umfassen muss; vielmehr ist darunter auch das Unterscheiden zwischen mehreren Tankgrößenkategorien bzw. eine Zuordnung zu einer solchen zu verstehen.

Hierfür wird zunächst ein Test-Befüllungsvorgang (hierbei kann auch von einem TestStoß gesprochen werden) veranlasst. Dies kann z.B. am Beginn eines Tankvorgangs, nachdem der Dispenser mit dem Tank verbunden worden ist und/oder nachdem ein Start eines Betankungsvorgangs z.B. durch Drücken eines Startknopfes veranlassen worden ist, erfolgen, insbesondere auch automatisch. Bei dem Test-Befüllungsvorgang wird Medium aus einer Versorgungseinrichtung über einen Dispenser in den Tank gefüllt wird. Die Versorgungseinrichtung kann z.B. einen Vorratstank oder Vorratsspeicher (z.B. bei einer Wasserstofftankstelle) umfassen, sowie etwaige nötige Leitungen für das Medium bis zum Dispenser. Der Dispenser kann mit dem Tank bzw. einer Tankstutzenkupplung des Fahrzeugs verbunden sein. Dieser Test-Befüllungsvorgangs kann, im Vergleich zu einem üblichen Befüllungsvorgang, besonders kurz sein, z.B. 60 Sekunden lang, aber auch kürzer, z.B. nur 5 Sekunden, 10 Sekunden oder 20 Sekunden.

Weiterhin werden einer oder mehrere erster Werte, insbesondere Messwerte, einer oder mehrerer erster Größen erhalten, die das Medium vor und/oder während und/oder nach dem Test-Befüllungsvorgang bzw. Teststoß in der Versorgungseinrichtung charakterisieren. Diese eine oder die mehreren ersten Größen können z.B. eine oder mehrere der folgenden Größen umfassen: einen Druck in der Versorgungseinrichtung, eine Temperatur in der Versorgungseinrichtung, ein Volumen der Versorgungseinrichtung. Beispielsweise können geeignete Sensoren an geeigneter Stelle verwendet werden, um die ersten Werte zu erfassen.

Weiterhin werden einer oder mehrere zweite Werte, insbesondere Messwerte, einer oder mehrerer zweiter Größen erhalten, die einen Massenfluss des Mediums zwischen der Versorgungseinrichtung und dem Tank während vor und/oder während und/oder nach dem Test-Befüllungsvorgang charakterisieren. Die zweiten Größen können selbst Massenflüsse sein. Bevorzugt werden mehrere Werte von mehreren zweiten Größen erhalten, und zwar von mehreren verschiedenen Sensoren, insbesondere Massenflussmessgeräten (die mehreren zweiten Größen sind dann zwar jeweils Massenflüsse, aber eben separat erfasste Massenflüsse). Dies ist insbesondere dann von Vorteil, wenn solche Sensoren oder Massenflussmessgeräte nicht SIL-2-fähig sind. Falls ein solcher Sensor der Massenflussmessgerät SIL-2-fähig ist, kann auch einer davon ausreichen.

In einer Ausführungsform können auch eine oder mehrere dritte Werte einer oder mehrerer dritter Größen, die das Medium vor und/oder während und/oder nach dem Test-Befüllungsvorgang in dem Tank charakterisieren, erhalten werden. Die eine oder die mehreren dritten Werte können bevorzugt über eine Datenschnittstelle von dem Fahrzeug erhalten werden, z.B. der schon erwähnten (und in der Regel nicht SIL-2-fähigen) Infrarotschnittstelle. Die eine oder die mehreren dritten Größen können z.B. eine oder mehrere der folgenden Größen umfassen: einen Druck in dem Tank, eine Temperatur in dem Tank, ein Volumen des Tanks.

Weiterhin werden dann mehrere Massendifferenzen bestimmt. Dies umfasst das Bestimmen, basierend auf dem einen oder den mehreren ersten Werten, einer ersten Massendifferenz zwischen einem Beginn und einem Ende des Test-Befüllungsvorgangs. Dies umfasst weiterhin das Bestimmen, basierend auf dem einen oder den mehreren zweiten Werten, einer zweiten Massendifferenz zwischen einem Beginn und einem Ende des Test-Befüllungsvorgangs. Für den Fall des Erhalts der dritten Werte umfasst dies weiterhin das Bestimmen, basierend auf dem einen oder den mehreren dritten Werten, einer dritten Massendifferenz zwischen einem Beginn und einem Ende des Test-Befüllungsvorgangs.

Auf diese Weise werden auf zwei oder ggf. drei verschiedene Arten und auch basierend zwei bzw. drei verschiedenen zugrundeliegenden Werten oder Messwerten jeweils Massendifferenzen bestimmt. Jede dieser Massendifferenzen gibt die während des Test-Befüllungsvorgangs in den Tank des Fahrzeugs geströmte Masse an Medium an - zumindest im Rahmen etwaiger Messfehler oder Messgenauigkeiten sowie Sicherheitslevel. Mit den erwähnten Größen lässt sich die Massendifferenz jeweils berechnen. So lässt sich eine Masse vor bzw. nach dem Test-Befüllungsvorgangs z.B. basierend auf den entsprechenden Temperaturen und Drücken über die Dichte bestimmen. Die Massenflussmessgeräte können z.B. einen Massenfluss liefern, der über die Dauer des Test-Befüllungsvorgangs auf integriert werden kann.

Weiterhin werden dann, in einem Vergleichsvorgang, die mehreren Massendifferenzen mit einer minimalen Massendifferenz und einer maximalen Massendifferenz verglichen, um ein Vergleichsergebnis zu erhalten. Basierend auf dem Vergleichsergebnis wird dann die Größe des Tanks bestimmt.

Die minimale Massendifferenz wird, in einer Ausführungsform, basierend auf einer minimalen, vorgegebenen Größe des Tanks und einem oder mehreren Werten jeweils einer oder mehrerer vierte Größen, die das Medium vor und/oder während und/oder nach dem Test-Befüllungsvorgang charakterisieren, bestimmt. Die die maximale Massendifferenz kann z.B. basierend auf einer maximalen, vorgegebenen Größe des Tanks und einem oder mehreren Werten jeweils der einen oder der mehreren vierten Größen bestimmt werden. Die eine oder die mehreren vierten Größen können z.B. eine oder mehrere der folgenden Größen umfassen: einen Druck in dem Dispenser, eine Temperatur in dem Dispenser. Die minimale und maximale Größe des Tanks können insbesondere basierend auf typischen Tankgrößenkategorien gewählt werden. So können für Pkws oder leichte Nkws z.B. Tankgrößen zwischen 50l und 200l Volumen üblich sein. Damit könnte eine Tankgrößenkategorie Tankgrößen zwischen 50l und 200l umfassen. Diese beiden Größen geben also an, welche Massendifferenzen minimal bzw. maximal bei einer bestimmten Tankgrößenkategorie zu erwarten wären. Indem nun aber zwei oder sogar drei auf verschiedene Art bestimmte Massendifferenzen damit abgeglichen werden, kann eine höhere Sicherheit bzw. Sicherheitsstufe bei der Bestimmung der Tankgröße erreicht werden.

So kann insbesondere bestimmt werden, dass die Größe des Tanks einer kleineren von zwei vorgegebenen Tankgrößenkategorien zuzuordnen ist, wenn die mehreren Massendifferenzen jeweils zwischen der minimalen Massendifferenz und der maximalen Massendifferenz liegen. Wenn hingegen zumindest eine der mehreren Massendifferenzen oberhalb der maximalen Massendifferenz liegt, kann bestimmt werden, dass die Größe des Tanks einer größeren der zwei vorgegebenen Tankgrößenkategorien zuzuordnen ist. Die kleiner der zwei Tankgrößenkategorien ist damit insbesondere diejenige, die durch die minimale und maximale vorgegebenen Größen des Tanks definiert ist, also z.B. zwischen 50l und 200l. Die größere der zwei Tankgrößenkategorien hingegen kann alles darüber, also z.B. genau oder mehr als 200l sein. Hierbei kann es sich dann insbesondere um einen Lkw handeln. Generell können diese minimale und maximale Größe aber auch anders gewählt oder vorgegeben werden.

Basierend auf der bestimmten Größe des Tanks (also z.B. einer der zwei Tankgrößenkategorien) kann dann eines von mehreren Befüllungsprotokollen (also z.B. eines für die kleinere oder eines für die größere Tankgrößenkategorie) gewählt werden. Der Tank kann dann gemäß dem gewählten Befüllungsprotokoll mit dem Medium befüllt bzw. betankt werden.

Für den oben erwähnten Fall, dass die dritten Werte nicht erhalten werden, da z.B. das Fahrzeug keine Datenschnittstelle aufweist, erfolgt die Bestimmung der Größe des Tanks also nur basierend auf zwei Massendifferenzen und damit letztlich mit einer etwas geringeren Sicherheitsstufe. Insofern kann vorgesehen sein, dass dann, wenn die größere der zwei Tankgrößenkategorie bestimmt wird, die Befüllung des Tanks mit Medium (Betankung) nur bis zu im Befüllungsprotokoll vorgesehenen Drücken vorgenommen werden. Diese Drücke sind dann die in der Regel niedriger als wenn die dritten Werte verfügbar sind, es kann von sog. NON-COM-Zieldrücken (wobei NON COM für das Fehlen einer Daten- bzw. Kommunikationsschnittstelle steht) gesprochen werden

In einer Ausführungsform wird weiterhin, in einem Prüfvorgang, geprüft, ob die mehreren Massendifferenzen (also zwei oder ggf. drei) jeweils unterhalb einer Grenz-Massendifferenz liegen, um ein Prüfergebnis zu erhalten. Die Grenz-Massendifferenz ergibt sich dabei basierend auf einer Dauer des Test-Befüllungsvorgangs und eines zulässigen Massenflusses. Ein solcher zulässiger Massenfluss kann z.B. ein anlagenspezifischer Grenzwert sein, der aus Sicherheitstechnischen Gründen nicht überschritten werden darf. Wenn zumindest eine der mehreren Massendifferenzen nicht unterhalb der Grenz-Massendifferenz liegt, kann ein z.B. nach dem Test-Befüllungsvorgang geplanter, ordnungsgemäßer, Befüllungsvorgang gestoppt werden oder gar nicht erst gestartet werden. Dies ist ein zusätzlicher Sicherheitsmechanismus.

Weiterhin betrifft die Erfindung ein Rechensystem, z.B. eine Speicherprogrammierbare Steuerung (SPS), das dazu eingerichtet, ein Verfahren wie vorstehend beschrieben, insbesondere programmtechnisch, auszuführen.

Weiterhin betrifft die Erfindung eine Anlage zum Befüllen eines Tanks mit Medium, insbesondere eine Wasserstofftankstelle. Die Anlage weist eine Versorgungseinrichtung für das Medium und einen Dispenser für das Medium auf; zudem ist die Anlage eingerichtet, das Medium aus dem Vorratsspeicher dem Dispenser zum Befüllen des Tanks zuzuführen; es können also geeignete Leitungen und ggf. weitere Komponenten vorhanden sein, wie z.B. für eine Wasserstofftankstelle üblich. Zudem weist die Anlage einen oder mehreren Sensoren auf, mittels welcher Messwerte für eine oder mehrere Größen, die das Medium und/oder eine Förderung des Mediums beim Befüllen charakterisieren, erfassbar sind; dabei kann es sich z.B. um Drucksensoren, Temperatursensoren, und Massenflussmessgeräte wie vorstehend erwähnt handeln. Zudem weist die Anlage ein erfindungsgemäßes Rechensystem auf.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

- Figur 1: zeigt schematisch eine erfindungsgemäße Anlage in einer bevorzugten Ausführungsform.
- Figur 2: zeigt schematisch einen Ablauf eines erfindungsgemäßen Verfahrens in einer bevorzugten Ausführungsform.

### Ausführliche Beschreibung der Zeichnung

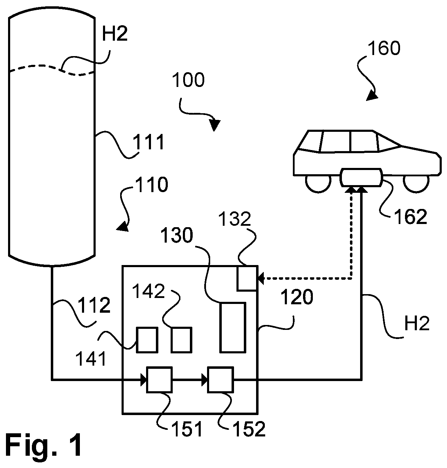

In Figur 1 ist schematisch eine erfindungsgemäßen Anlage 100 in einer bevorzugten Ausführungsform dargestellt, bei der auch ein erfindungsgemäßes Verfahren durchführbar ist. Die Anlage 100 dient zum Befüllen eines Tanks mit einem Mediums, z.B. Wasserstoff. Beispielhaft handelt es sich bei der Anlage 100 um eine Wasserstofftankstelle.

Die Anlage 100 weist eine Versorgungseinrichtung 110 für das Medium H2, also z.B. Wasserstoff, und einen Dispenser 120 für das Medium auf. Die Versorgungseinrichtung 110 umfasst hier beispielhaft einen Vorratstank 111 sowie Leitungen bzw. Zuführungen 112 zum Dispenser 120. Die Anlage 100 ist eingerichtet, das Medium H2 aus der Versorgungseinrichtung 110 dem Dispenser 120 zum Befüllen eines Tanks 162 von z.B. einem Fahrzeug 160 zuzuführen. Der Dispenser 120 kann ein hier nicht gezeigtes Betankungsequipment aufweisen oder mit einem solchen verbunden sein, um einen Transfer des Mediums zum Tank 162 zu ermöglichen. Außerdem können die Anlage 100 und/oder der Dispenser 120 weitere Komponenten aufweisen, wie sie zum Betrieb einer solchen Anlage, also z.B. einer Wasserstofftankstelle nötig sind, z.B. eine Pumpe und andere nötige Leitungen und dergleichen.

### Weiterhin weist die Anlage 100, hier im Dispenser 120, ein Rechensystem 130 auf. Bei dem

Rechensystem 130 kann es sich insbesondere um eine Speicher-Programmierbare-Steuerung, eine sog. SPS, handeln. Weiterhin sind beispielhaft zwei Sensoren, z.B. ein Drucksensor 141 und ein Temperatursensor 142, vorgesehen. Weiterhin sind beispielhaft zwei Massenflussmessgeräte 151, 152 vorgesehen, über die das Medium H2 fließt, wenn der Tank 162 befüllt wird. Beide Massenflussmessgeräte 151, 152 können derart angeordnet sein, dass sie unmittelbar hintereinander von dem Medium durchflossen werden und damit den gleichen Massenfluss erfassen oder zumindest erfassen sollten. Außerdem können weitere Sensoren für z.B. Druck und Temperatur vorgesehen sein, die hier nicht gezeigt sind, und zwar insbesondere auch außerhalb des Dispensers 120, z.B. an oder in der Versorgungseinrichtung 110 sowie auch am oder im Fahrzeug 160, dort insbesondere auch im Tank 162.

Weiterhin weist die Anlage 100, hier im Dispenser 120, eine Datenschnittstelle 132, z.B. eine Infrarotschnittstelle, auf, über die Werten verschiedener Größen z.B. vom Fahrzeug 160, erhalten werden können. Es sei erwähnt, dass die Datenschnittstelle 132 derart anzuordnen ist, dass eine Kommunikationsverbindung mit einer entsprechenden Datenschnittstelle am Fahrzeug herstellbar ist. So kann die Datenschnittstelle 132 z.B. in einem Betankungsstutzen des Dispenser 120 angeordnet sein.

Das Rechensystem 130 ist insbesondere datenübertragend mit den Sensoren, z.B. den Sensoren 141, 142, den Massenflussmessgeräten 151, 152 sowie der Datenschnittstelle 132 verbunden, um von dort jeweils Werte oder Messwerte erhalten zu können.

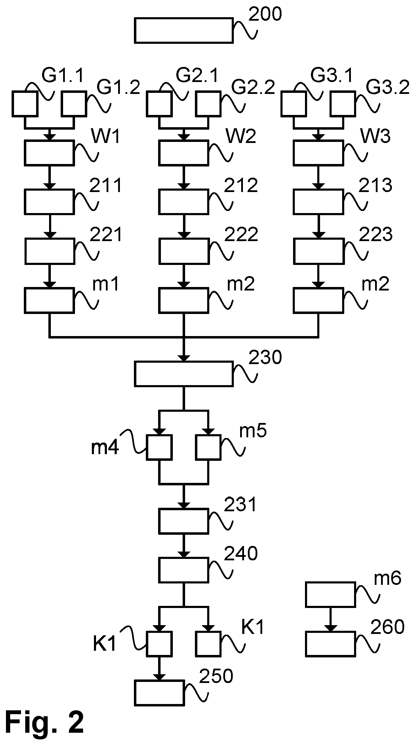

Ein Betrieb der Anlage 100 bzw. des Rechensystems 130, und zwar insbesondere zum Bestimmen einer Größe des Tanks 162, soll nachfolgend unter Bezug auf Figur 2 näher erläutert werden.

In Figur 2 ist schematisch ein Ablauf eines erfindungsgemäßen Verfahrens in einer bevorzugten Ausführungsform dargestellt, und zwar ein Verfahren zum Bestimmen einer Größe eines Tanks, der mit Medium, insbesondere Wasserstoff, zu befüllen ist, wie bereits in Bezug auf Figur 1 erwähnt.

Hierfür wird zunächst ein Test-Befüllungsvorgang 200 veranlasst. Dazu kann das Rechensystem z.B. einen entsprechenden Befehl ausgeben, mit dem entsprechende Ventile in den Leitungen geöffnet werden. Dies kann z.B. am Beginn eines Tankvorgangs, nachdem der Dispenser mit dem Tank verbunden worden ist und/oder nachdem ein Start eines Betankungsvorgangs z.B. durch Drücken eines Startknopfes veranlassen worden ist, erfolgen, z.B. automatisch. Bei dem Test-Befüllungsvorgang 200 wird Medium H2 aus der Versorgungseinrichtung über den Dispenser in den Tank gefüllt wird. Dieser Test-Befüllungsvorgang 200 kann, im Vergleich zu einem üblichen Befüllungsvorgang, besonders kurz sein, z.B. 60 Sekunden lang, aber auch kürzer, z.B. nur 5 Sekunden, 10 Sekunden oder 20 Sekunden.

Weiterhin werden dann z.B. mehrere Werte, insbesondere Messwerte, beispielsweise in Form eines Messwerteverlaufs über die Zeit, einer oder mehrerer erster Größen erhalten, die das Medium vor und/oder während und/oder nach dem Test-Befüllungsvorgang in der Versorgungseinrichtung charakterisieren. Beispielhaft ist ein erster Wert mit W1 bezeichnet. Beispielhaft sind zwei erste Größen G1.1, G1.2 gezeigt, hierbei kann es sich insbesondere um einen Druck sowie eine Temperatur in der Versorgungseinrichtung handeln. Beispielsweise können geeignete Sensoren, wie erwähnt, verwendet werden, um die ersten Werte zu erfassen Zudem kann ein Volumen der Versorgungseinrichtung berücksichtigt werden; da dieses typischerweise bekannt ist, kann ein Wert hierfür auch einfach hinterlegt sein.

Weiterhin wird, in einem Schritt 211, basierend auf den ersten Werten W1, eine ersten Massendifferenz m1 zwischen einem Beginn und einem Ende des Test-Befüllungsvorgangs bestimmt.

Bei dieser ersten Massendifferenz m1 handelt es sich insbesondere um eine berechnete, aus der Versorgungseinrichtung (also z.B. dem Speichertank oder aus einem druckführenden Volumen innerhalb der Tankstelle) entnommene Masse an Medium. Diese kann z.B. mit Hilfe von TTs und PTs als Sensoren für Druck und Temperatur, z.B. am Speicher bzw. an der Druckquelle und unter Zuhilfenahme einer Dichteberechnung bestimmt werden, z.B. mittels Näherungspolynom (vgl. z.B. Gleichung J98 aus SAE J2601-2020). Die Berechnung kann innerhalb des Rechensystems (SPS) z.B. einmal im sog. F-Teil oder Failsafe-Teil (vereinfachte Formel) und einmal im Standardprogramm der SPS berechnet. Diese beiden Ergebnisse können dann nochmals miteinander verglichen werden, und wenn die Abweichung kleiner als ein Schwellwert wie z.B. 1,5 g/l ist, wird im F-Teil der SPS die Masse mit der Dichteberechnung aus dem Standardprogramm ermittelt. Die Dichte kann generell über die Formel *V =* Δ*m*/(*ρᵢₙₜᵢₐₗ - ρ_{final}*) berechnet werden, wobei *ρᵢₙₜᵢₐₗ*, *ρ_{final}* die Dichte vor und nach dem Test-Befüllungsvorgang angeben, V das Volumen der Versorgungseinrichtung, und Δ*m* allgemein die Massendifferenz zwischen den Massen vor und nach dem Test-Befüllungsvorgang.

Weiterhin werden dann z.B. mehrere zweite Werte, insbesondere Messwerte, beispielsweise in Form eines Messwerteverlaufs über die Zeit, einer oder mehrerer zweiter Größen erhalten, die einen Massenfluss (oder Massenstrom) des Mediums H2 zwischen der Versorgungseinrichtung und dem Tank vor und/oder während und/oder nach dem Test-Befüllungsvorgang charakterisieren. Beispielhaft ist ein zweiter Wert mit W2 bezeichnet. Beispielhaft sind zwei zweite Größen G2.1, G2.2 gezeigt, hierbei kann es sich insbesondere um einen Massenfluss, gemessen von einem ersten Massenflussmessgerät, und einen Massenfluss, gemessen von einem zweiten Massenflussmessgerät (vgl. Bezugszeichnen 151, 152 in Figur 1 handeln.

Weiterhin wird, in einem Schritt 222, basierend auf den zweiten Werten W2, eine zweite Massendifferenz m2 zwischen einem Beginn und einem Ende des Test-Befüllungsvorgangs bestimmt. Hierzu kann z.B. der Massenfluss eines jeden der zwei Massenflussmessgeräte über die Dauer des Test-Befüllungsvorgangs integriert werden. Beide Ergebnisse können dann miteinander verglichen werden, und wenn eine Abweichung geringer als ein Schwellwert ist, kann z.B. ein Mittelwert beider Ergebnisse als die zweite Massendifferenz verwendet werden. Falls ein Massenflussmessgerät verwendet wird, das SIL-2-fähig ist, kann auch eines davon, und dann nur eine zweite Größe, ausreichen.

Optional werden weiterhin z.B. mehrere Werte einer oder mehrerer dritter Größen erhalten, die das Medium H2 vor und/oder während und/oder nach dem Test-Befüllungsvorgang in dem Tank charakterisieren. Beispielhaft ist ein dritter Wert mit W3 bezeichnet. Beispielhaft sind zwei dritte Größen G3.1, G3.2 gezeigt, hierbei kann es sich insbesondere um einen Druck in dem Tank, eine Temperatur in dem Tank, sowie ein Volumen des Tanks handeln, und zwar erhalten über die in Figur 1 gezeigte Datenschnittstelle. Wie erwähnt, sind hierfür verwendete Datenschnittstellen in der Regel nicht SIL-2-fähig (z.B. bei einer Infrarotschnittstelle). Auch

Weiterhin wird, in einem Schritt 223, basierend auf dritten Werten W3, eine dritte Massendifferenz m3 zwischen einem Beginn und einem Ende des Test-Befüllungsvorgangs bestimmt. Dies kann z.B. anhand Druck, Temperatur und Volumen wie oben schon erwähnt erfolgen.

Auf diese Weise werden auf zwei oder ggf. drei verschiedene Arten und auch basierend zwei bzw. drei verschiedenen zugrundeliegenden Werten oder Messwerten jeweils Massendifferenzen bestimmt. Jede dieser Massendifferenzen gibt die während des Test-Befüllungsvorgangs in den Tank des Fahrzeugs geströmte Masse an Medium an - zumindest im Rahmen etwaiger Messfehler oder Messgenauigkeiten sowie Sicherheitslevel.

Es sei erwähnt, dass es auf die Reihenfolge der erwähnten Schritte zum Erhalten der jeweiligen Werte und dem Berechnen der jeweiligen Massen nicht ankommt, lediglich nach Ende des Test-Befüllungsvorgangs sollten alle zwei bzw. drei Massendifferenzen vorliegen, um den nachfolgenden Vergleich durchführen zu können.

Nach einer vorgegebenen Dauer von z.B. 60 Sekunden, insbesondere, direkt nach dem Öffnen eines Hauptbetankungsventils, findet ein Betankungsstopp statt. Bei diesem Stopp kann einerseits das System auf Dichtheit überprüft werden (hierbei wird eine Druckabweichung im Tank des Fahrzeugs nach unten und nach oben geprüft) und weiterhin wird der nachfolgend zu beschreibende Vergleichsvorgang durchgeführt.

Weiterhin werden dann, in einem Vergleichsvorgang 230, die Massendifferenzen m1, m2, m3 mit einer minimalen Massendifferenz m4 und einer maximalen Massendifferenz m5 verglichen, um ein Vergleichsergebnis 231 zu erhalten. Basierend auf dem Vergleichsergebnis 231 wird dann, in Schritt 240, die Größe des Tanks bestimmt.

Die minimale Massendifferenz m4 wird z.B. basierend auf einer minimalen, vorgegebenen Größe des Tanks und z.B. mehreren Werten z.B. mehrerer vierter Größen bestimmt, die das Medium vor und/oder während und/oder nach dem Test-Befüllungsvorgang charakterisieren. So entspricht die minimale Massendifferenz m4 z.B. der in Echtzeit mitberechneten, zu erwartenden und während des Test-Befüllungsvorgang transferierten Masse für ein Fahrzeug mit einem Tank der Größe 2kg bzw. 50l, ermittelt aus Temperatur des Mediums am letzten Messpunkt des Dispensers sowie unter Zuhilfenahme des Drucks im Dispenser. Dabei wird die Annahme eines fixen Tankvolumens von den erwähnten 50l getroffen. Diese 50l entsprechen dem erwarteten minimalen Tankvolumen aus SAE J2601-2020. Grundsätzlich kommen aber auch andere Tankgrößen hierfür in Betracht.

Die maximale Massendifferenz m5 wird z.B. basierend auf einer maximalen, vorgegebenen Größe des Tanks und z.B. mehreren Werten z.B. mehrerer vierter Größen bestimmt, die das Medium vor und/oder während und/oder nach dem Test-Befüllungsvorgang charakterisieren. So entspricht die maximale Massendifferenz m5 z.B. der in Echtzeit mitberechneten, zu erwartenden und während des Test-Befüllungsvorgang transferierten Masse für ein Fahrzeug mit einem Tank der Größe 10kg bzw. 250l, ermittelt aus Temperatur des Mediums am letzten Messpunkt des Dispensers sowie unter Zuhilfenahme des Drucks im Dispenser. Dabei wird die Annahme eines fixen Tankvolumens von den erwähnten 250l getroffen. Diese 250l entsprechen dem erwarteten maximalen Tankvolumen aus SAE J2601für einen Pkw. Grundsätzlich kommen aber auch andere Tankgrößen hierfür in Betracht.

Das Bestimmen der Größe des Tanks in Schritt 240 umfasst insbesondere, dass bestimmt wird, dass die Größe des Tanks einer kleineren Tankgrößenkategorie K1 von zwei vorgegebenen Tankgrößenkategorien zuzuordnen ist, wenn die mehreren Massendifferenzen jeweils zwischen der minimalen Massendifferenz und der maximalen Massendifferenz liegen. Es umfasst hingegen das Bestimmen, dass die Größe des Tanks einer größeren Tankgrößenkategorien K2 der zwei vorgegebenen Tankgrößenkategorien zuzuordnen ist, wenn zumindest eine der mehreren Massendifferenzen oberhalb der maximalen Massendifferenz liegt.

Basierend auf der bestimmten Größe des Tanks, also z.B. der Zuordnung zu einer der Tankgrößenkategorien, kann dann eines von mehreren Befüllungsprotokollen gewählt werden; in Figur 2 ist beispielhaft ein Befüllungsprotokollen 250 gewählt. Der Tank wird dann gemäß dem gewählten Befüllungsprotokoll mit dem Medium befüllt. Die Grenz-Massendifferenz m6 ergibt sich dabei basierend auf einer Dauer des Test-Befüllungsvorgangs und eines zulässigen Massenflusses. Ein solcher zulässiger Massenfluss kann z.B. ein anlagenspezifischer Grenzwert sein, der aus Sicherheitstechnischen Gründen nicht überschritten werden darf. Wenn alle Massendifferenzen m1, m2, m3 unterhalb der Grenz-Massendifferenz m6 liegen, kann wie erwähnt mit dem Befüllung gemäß ausgewähltem Befüllungsprotokoll fortgefahren werden.

Wenn zumindest eine der mehreren Massendifferenzen m1, m2, m3 nicht unterhalb der Grenz-Massendifferenz m6 liegt, kann ein z.B. nach dem Test-Befüllungsvorgang geplanter, ordnungsgemäßer, Befüllungsvorgang gestoppt werden oder gar nicht erst gestartet werden. Dies ist ein zusätzlicher Sicherheitsmechanismus. Dies gilt insbesondere aber auch dann, wenn die dritte Massendifferenz m3 nicht verfügbar ist, z.B. weil die dritten Werte vom Fahrzeug nicht erhalten werden können.

Im Rahmen der vorliegenden Erfindung kann also sichergestellt werden, dass Fahrzeuge, deren Einfüllstutzen (Tankstutzenkupplung) mit dem entsprechenden Dispenser bzw. dessen Zapfpistole mechanisch kompatibel sind und die unterschiedliche Tankgrößen besitzen, stets mit dem korrekten Betankungsprotokoll betankt werden. Damit kann der Auslastungsgrad von Wasserstoffdispensern bei gleichzeitig gesteigertem Sicherheitslevel des Betankungsprozesses erhöht werden.

## Patentansprüche

1. Verfahren zum Bestimmen einer Größe eines Tanks (162), der mit Medium (H2), insbesondere Wasserstoff, zu befüllen ist, umfassend:
Veranlassen eines Test-Befüllungsvorgangs (200), bei dem Medium (H2) aus einer Versorgungseinrichtung (110) über einen Dispenser (120) in den Tank (162) gefüllt wird;
Erhalten (211) eines oder mehrerer erster Werte (W1), insbesondere Messwerte, einer oder mehrerer erster Größen (G1.1, G1.2), die das Medium vor und/oder während und/oder nach dem Test-Befüllungsvorgang in der Versorgungseinrichtung charakterisieren;
Erhalten (212) eines oder mehrerer zweiter Werte (W2), insbesondere Messwerte, einer oder mehrerer zweiter Größen (G2.1, G.2.2), die einen Massenfluss des Mediums zwischen der Versorgungseinrichtung und dem Tank während vor und/oder während und/oder nach dem Test-Befüllungsvorgang charakterisieren;
Bestimmen mehrerer Massendifferenzen (m1, m2, m3), umfassend:
- Bestimmen (221), basierend auf dem einen oder den mehreren ersten Werten (W1), einer ersten Massendifferenz (m1) zwischen einem Beginn und einem Ende des Test-Befüllungsvorgangs; und
- Bestimmen (222), basierend auf dem einen oder den mehreren zweiten Werten (W2), einer zweiten Massendifferenz (m2) zwischen einem Beginn und einem Ende des Test-Befüllungsvorgangs;
Vergleichen, in einem Vergleichsvorgang (230), der mehreren Massendifferenzen (m1, m2, m3) mit einer minimalen Massendifferenz (m4) und einer maximalen Massendifferenz (m5), um ein Vergleichsergebnis (231) zu erhalten; und
Bestimmen (240), basierend auf dem Vergleichsergebnis (231), der Größe des Tanks.

2. Verfahren nach Anspruch 1, wobei die minimale Massendifferenz (m4) basierend auf einer minimalen, vorgegebenen Größe des Tanks und einem oder mehreren Werten einer oder mehrerer vierter Größen, die das Medium vor und/oder während und/oder nach dem Test-Befüllungsvorgang charakterisieren, bestimmt wird, und/oder
wobei die maximale Massendifferenz (m5) basierend auf einer maximalen, vorgegebenen Größe des Tanks und einem oder mehreren Werten jeweils der einen oder der mehreren vierten Größen, die das Medium vor und/oder während und/oder nach dem Test-Befüllungsvorgang charakterisieren, bestimmt wird.

3. Verfahren nach Anspruch 2, wobei das Bestimmen (240) der Größe des Tanks umfasst:
Bestimmen, dass die Größe des Tanks einer kleineren von zwei vorgegebenen Tankgrößenkategorien (K1, K2) zuzuordnen ist, wenn die mehreren Massendifferenzen jeweils zwischen der minimalen Massendifferenz (m4) und der maximalen Massendifferenz (m5) liegen, und/oder
wobei das Bestimmen der Größe des Tanks umfasst:
Bestimmen, dass die Größe des Tanks einer größeren der zwei vorgegebenen Tankgrößenkategorien (K1, K2) zuzuordnen ist, wenn zumindest eine der mehreren Massendifferenzen oberhalb der maximalen Massendifferenz (m5) liegt.

4. Verfahren nach Anspruch 2 oder 3, wobei die eine oder die mehreren vierten Größen, die das Medium vor und/oder während und/oder nach dem Test-Befüllungsvorgang charakterisieren, eine oder mehrere der folgenden Größen umfassen: einen Druck in dem Dispenser, eine Temperatur in dem Dispenser.

5. Verfahren nach einem der vorstehenden Ansprüche, weiterhin umfassend:
Erhalten (213) eines oder mehrerer dritter Werte (W13) einer oder mehrerer dritter Größen (G3.1, G3.2), die das Medium vor und/oder während und/oder nach dem Test-Befüllungsvorgang in dem Tank charakterisieren;
wobei das Bestimmen der mehreren Massendifferenzen weiterhin umfasst:
Bestimmen, basierend auf dem einen oder den mehreren dritten Werten (W3), einer dritten Massendifferenz (m3) zwischen einem Beginn und einem Ende des Test-Befüllungsvorgangs.

6. Verfahren nach Anspruch 5, wobei der eine oder die mehreren dritten Werte (W3) über eine Datenschnittstelle (132) von dem Fahrzeug (160) erhalten werden.

7. Verfahren nach Anspruch 5 oder 6, wobei die eine oder die mehreren dritten Größen (G3.1, G3.2), die das Medium vor und/oder während und/oder nach dem Test-Befüllungsvorgang in dem Tank charakterisieren, eine oder mehrere der folgenden Größen umfassen: einen Druck in dem Tank, eine Temperatur in dem Tank, ein Volumen des Tanks.

8. Verfahren nach einem der vorstehenden Ansprüche, wobei die eine oder die mehreren ersten Größen (G1.1, G1.2), die das Medium vor und/oder während und/oder nach dem Test-Befüllungsvorgang in der Versorgungseinrichtung charakterisieren, eine oder mehrere der folgenden Größen umfassen: einen Druck in der Versorgungseinrichtung, eine Temperatur in der Versorgungseinrichtung, ein Volumen der Versorgungseinrichtung.

9. Verfahren nach einem der vorstehenden Ansprüche, wobei mehrere Werte von mehreren zweiten Größen (G2.1, G.2.2), die einen Massenfluss des Mediums zwischen der Versorgungseinrichtung und dem Tank während vor und/oder während und/oder nach dem Test-Befüllungsvorgang charakterisieren, von mehreren verschiedenen Sensoren, insbesondere Massenflussmessgeräten, erhalten werden.

10. Verfahren nach einem der vorstehenden Ansprüche, weiterhin umfassend:
Prüfen, in einem Prüfvorgang (260), ob die mehreren Massendifferenzen (m1, m2, m3) jeweils unterhalb einer Grenz-Massendifferenz (m6) liegen, die sich basierend auf einer Dauer des Test-Befüllungsvorgangs und eines zulässigen Massenflusses ergibt, um ein Prüfergebnis zu erhalten; und
Stoppen oder Nichtstarten eines Befüllungsvorgangs, wenn zumindest eine der mehreren Massendifferenzen nicht unterhalb der Grenz-Massendifferenz liegt.

11. Verfahren nach einem der vorstehenden Ansprüche, wobei basierend auf der bestimmten Größe des Tanks eines von mehreren Befüllungsprotokollen (250) gewählt wird, und wobei insbesondere der Tank gemäß dem gewählten Befüllungsprotokoll mit dem Medium befüllt wird.

12. Rechensystem (130), das eingerichtet ist, ein Verfahren nach einem der vorstehenden Ansprüche auszuführen.

13. Anlage (100) zum Befüllen eines Tanks (162)mit Medium (H2), insbesondere Wasserstofftankstelle, wobei die Anlage (100) eine Versorgungseinrichtung (110) für das Medium und einen Dispenser (120) für das Medium aufweist, wobei die Anlage (100) eingerichtet ist, das Medium aus der Versorgungseinrichtung (110) dem Dispenser (120) zum Befüllen des Tanks zuzuführen,
wobei die Anlage (100) vorzugsweise einen oder mehreren Sensoren (141, 142, 151, 152) aufweist, mittels welcher Messwerte für eine oder mehrere Größen, die das Medium und/oder eine Förderung des Mediums beim Befüllen charakterisieren, erfassbar sind, und
wobei die Anlage (100) ein Rechensystem (130) nach Anspruch 12 aufweist.

14. Computerprogramm umfassend Befehle, die bei der Ausführung des Programms durch ein Rechensystem (1300) dieses veranlassen, das Verfahren nach einem er Ansprüche 1 bis 11 auszuführen.

15. Computerlesbarer Datenträger, auf dem das Computerprogramm nach Anspruch 14 gespeichert ist.

## Claims

1. A method for determining a size of a tank (162) that is to be filled with medium (H2), in particular hydrogen, comprising:
initiating a test filling process (200) in which the tank (162) is filled with medium (H2) from a supply device (110) via a dispenser (120);
obtaining (211) one or more first values (W1), in particular measured values, of one or more first variables (G1.1, G1.2) that characterize the medium in the supply device prior to and/or during and/or after the test filling process;
obtaining (212) one or more second values (W2), in particular measured values, of one or more second variables (G2.1, G2.2) that characterize a mass flow of the medium between the supply device and the tank prior to and/or during and/or after the test filling process;
determining a plurality of mass differentials (m1, m2, m3) comprising:
- determining (221), on the basis of the one or more first values (W1), a first mass differential (m1) between the beginning and the end of the test filling process; and
- determining (222), on the basis of the one or more second values (W2), a second mass differential (m2) between the beginning and the end of the test filling process;
comparing, in a comparison process (230), the plurality of mass differentials (m1, m2, m3) with a minimum mass differential (m4) and a maximum mass differential (m5), in order to obtain a comparison result (231); and
determining (240), on the basis of the comparison result (231), the size of the tank.

2. The method according to claim 1, wherein the minimum mass differential (m4) is determined on the basis of a minimum, prespecified size of the tank and one or more values of one or more fourth variables that characterize the medium prior to and/or during and/or after the test filling process, and/or
wherein the maximum mass differential (m5) is determined on the basis of a maximum, prespecified size of the tank and one or more values of each of the one or more fourth variables that characterize the medium prior to and/or during and/or after the test filling process.

3. The method according to claim 2, wherein the determination (240) of the size of the tank comprises:
determining that the size of the tank is to be assigned to a smaller of two prespecified tank size categories (K1, K2) if the plurality of mass differentials each lie between the minimum mass differential (m4) and the maximum mass differential (m5), and/or
wherein the determination of the size of the tank comprises:
determining that the size of the tank is to be assigned to a larger of the two prespecified tank size categories (K1, K2) if at least one of the plurality of mass differentials lies above the maximum mass differential (m5).

4. The method according to claim 2 or 3, wherein the one or more fourth variables that characterize the medium prior to and/or during and/or after the test filling process comprise one or more of the following variables: a pressure in the dispenser, a temperature in the dispenser.

5. The method according to any of the preceding claims, furthermore comprising:
obtaining (213) one or more third values (W13) of one or more third variables (G3.1, G3.2) that characterize the medium prior to and/or during and/or after the test filling process in the tank;
wherein the determination of the plurality of mass differentials furthermore comprises: determining, on the basis of the one or more third values (W3), a third mass differential (m3) between the beginning and the end of the test filling process.

6. The method according to claim 5, wherein the one or more third values (W3) are obtained from the vehicle (160) via a data interface (132).

7. The method according to claim 5 or 6, wherein the one or more third variables (G3.1, G3.2) that characterize the medium prior to and/or during and/or after the test filling process in the tank comprise one or more of the following variables: a pressure in the tank, a temperature in the tank, a volume of the tank.

8. The method according to any of the preceding claims, wherein the one or more first variables (G1.1, G1.2) that characterize the medium prior to and/or during and/or after the test filling process in the supply device comprise one or more of the following variables: a pressure in the supply device, a temperature in the supply device, a volume of the supply device.

9. The method according to any of the preceding claims, wherein a plurality of values of a plurality of second variables (G2.1, G.2.2) that characterize a mass flow of the medium between the supply device and the tank prior to and/or during and/or after the test filling process are obtained from a plurality of different sensors, in particular mass flow meters.

10. The method according to any of the preceding claims, furthermore comprising:
checking, in a test process (260), whether the plurality of mass differentials (m1, m2, m3) each lie below a limit mass differential (m6) that is obtained on the basis of a duration of the test filling process and a permissible mass flow in order to obtain a test result; and
stopping or not starting a filling process if at least one of the plurality of mass differentials is not below the limit mass differential.

11. The method according to any of the preceding claims, wherein one of a plurality of filling protocols (250) is selected on the basis of the determined size of the tank, and wherein in particular the tank is filled with the medium according to the selected filling protocol.

12. A calculating system (130) that is configured to carry out a method according to any of the preceding claims.

13. A system (100) for filling a tank (162) with medium (H2), in particular a hydrogen filling station, wherein the system (100) has a supply device (110) for the medium and a dispenser (120) for the medium, wherein the system (100) is configured to supply the medium from the supply device (110) to the dispenser (120) for filling the tank,
wherein the system (100) preferably has one or more sensors (141, 142, 151, 152) by means of which measured values for one or more variables that characterize the medium and/or a conveyance of the medium during filling can be detected, and
wherein the system (100) has a calculating system (130) according to claim 12.

14. A computer program comprising instructions which, when the program is executed by a calculating system (1300), cause it to carry out the method according to any of claims 1 to 11.

15. A computer-readable data carrier on which the computer program according to claim 14 is stored.

## Revendications

1. Procédé permettant de déterminer une grandeur d'un réservoir (162) qui est destiné à être rempli d'un fluide (H2), en particulier d'hydrogène, comprenant :
le déclenchement d'une opération de remplissage d'essai (200) au cours de laquelle le fluide (H2) provenant d'un dispositif d'alimentation (110) est rempli dans le réservoir (162) par l'intermédiaire d'un distributeur (120) ;
l'obtention (211) d'une ou plusieurs premières valeurs (W1), notamment des valeurs de mesure, d'une ou plusieurs premières grandeurs (G1.1, G1.2) qui caractérisent le fluide avant et/ou pendant et/ou après l'opération de remplissage d'essai dans le dispositif d'alimentation ;
l'obtention (212) d'une ou plusieurs deuxièmes valeurs (W2), notamment des valeurs de mesure, d'une ou plusieurs deuxièmes grandeurs (G2.1, G.2.2), qui caractérisent un débit massique du fluide entre le dispositif d'alimentation et le réservoir pendant avant et/ou pendant et/ou après l'opération de remplissage d'essai ;
la détermination de plusieurs différences de masse (m1, m2, m3), comprenant :
- la détermination (221), sur la base de la ou des plusieurs premières valeurs (W1), d'une première différence de masse (m1) entre un début et une fin de l'opération de remplissage d'essai ; et
- la détermination (222), sur la base de la ou des plusieurs deuxièmes valeurs (W2), d'une deuxième différence de masse (m2) entre un début et une fin de l'opération de remplissage d'essai ;
la comparaison, au cours d'une opération de comparaison (230), des plusieurs différences de masse (m1, m2, m3) avec une différence de masse minimale (m4) et une différence de masse maximale (m5), afin d'obtenir un résultat de comparaison (231) ; et
la détermination (240), sur la base du résultat de comparaison (231), de la grandeur du réservoir.

2. Procédé selon la revendication 1, dans lequel la différence de masse minimale (m4) est déterminée sur la base d'une grandeur minimale prédéfinie du réservoir et d'une ou plusieurs valeurs d'une ou plusieurs quatrièmes grandeurs, qui caractérisent le fluide avant et/ou pendant et/ou après l'opération de remplissage d'essai, et/ou
dans lequel la différence de masse maximale (m5) est déterminée sur la base d'une grandeur maximale prédéfinie du réservoir et d'une ou plusieurs valeurs, respectivement, de l'une ou des plusieurs quatrièmes grandeurs qui caractérisent le fluide avant et/ou pendant et/ou après l'opération de remplissage d'essai.

3. Procédé selon la revendication 2, dans lequel la détermination (240) de la grandeur du réservoir comprend :
la détermination que la grandeur du réservoir doit être associée à une plus petite de deux catégories de grandeur de réservoir (K1, K2) prédéfinies, lorsque les plusieurs différences de masse se situent respectivement entre la différence de masse minimale (m4) et la différence de masse maximale (m5), et/ou
dans lequel la détermination de la grandeur du réservoir comprend :
la détermination que la grandeur du réservoir doit être associée à une plus grande des deux catégories de grandeur de réservoir (K1, K2) prédéfinies si au moins l'une des plusieurs différences de masse est supérieure à la différence de masse maximale (m5).

4. Procédé selon la revendication 2 ou 3, dans lequel la ou les plusieurs quatrièmes grandeurs qui caractérisent le fluide avant et/ou pendant et/ou après l'opération de remplissage d'essai comprennent une ou plusieurs des grandeurs suivantes : une pression dans le distributeur, une température dans le distributeur.

5. Procédé selon l'une des revendications précédentes, comprenant en outre :
l'obtention (213) d'une ou plusieurs troisièmes valeurs (W13) d'une ou plusieurs troisièmes grandeurs (G3.1, G3.2) qui caractérisent le fluide avant et/ou pendant et/ou après l'opération de remplissage d'essai dans le réservoir ;
dans lequel la détermination des plusieurs différences de masse comprend en outre : la détermination, sur la base de la ou des plusieurs troisièmes valeurs (W3), d'une troisième différence de masse (m3) entre un début et une fin de l'opération de remplissage d'essai.

6. Procédé selon la revendication 5, dans lequel la ou les plusieurs troisièmes valeurs (W3) sont obtenues à partir du véhicule (160) par l'intermédiaire d'une interface de données (132).

7. Procédé selon la revendication 5 ou 6, dans lequel la ou les plusieurs troisièmes grandeurs (G3.1, G3.2) qui caractérisent le fluide avant et/ou pendant et/ou après l'opération de remplissage d'essai dans le réservoir comprennent une ou plusieurs des grandeurs suivantes : une pression dans le réservoir, une température dans le réservoir, un volume du réservoir.

8. Procédé selon l'une des revendications précédentes, dans lequel la ou les plusieurs premières grandeurs (G1.1, G1.2), qui caractérisent le fluide avant et/ou pendant et/ou après l'opération de remplissage d'essai dans le dispositif d'alimentation, comprennent une ou plusieurs des grandeurs suivantes : une pression dans le dispositif d'alimentation, une température dans le dispositif d'alimentation, un volume du dispositif d'alimentation.

9. Procédé selon l'une des revendications précédentes, dans lequel plusieurs valeurs de plusieurs deuxièmes grandeurs (G2.1, G.2.2), qui caractérisent un débit massique du fluide entre le dispositif d'alimentation et le réservoir pendant avant et/ou pendant et/ou après l'opération de remplissage d'essai, sont obtenues à partir de plusieurs capteurs différents, notamment des débitmètres massiques.

10. Procédé selon l'une des revendications précédentes, comprenant en outre :
la vérification, au cours d'une opération d'essai (260), de si les plusieurs différences de masse (m1, m2, m3) sont respectivement inférieures à une différence de masse limite (m6), qui est établie sur la base d'une durée de l'opération de remplissage d'essai et d'un débit massique admissible, afin d'obtenir un résultat de vérification ; et
l'arrêt ou le non-démarrage d'une opération de remplissage si au moins l'une des différences de masse n'est pas inférieure à la différence de masse limite.

11. Procédé selon l'une des revendications précédentes, dans lequel l'un parmi plusieurs protocoles de remplissage (250) est sélectionné sur la base de la grandeur déterminée du réservoir, et dans lequel, notamment, le réservoir est rempli avec le fluide conformément au protocole de remplissage sélectionné.

12. Système de calcul (130) qui est conçu pour mettre en œuvre un procédé selon l'une des revendications précédentes.

13. Installation (100) destinée au remplissage d'un réservoir (162) avec un fluide (H2), en particulier une station-service à hydrogène, dans laquelle l'installation (100) présente un dispositif d'alimentation (110) pour le fluide et un distributeur (120) pour le fluide, dans laquelle l'installation (100) est destinée à acheminer le fluide depuis le dispositif d'alimentation (110) vers le distributeur (120) en vue du remplissage du réservoir,
dans laquelle l'installation (100) présente de préférence un ou plusieurs capteurs (141, 142, 151, 152), par le biais desquels il est possible de relever des valeurs de mesure pour une ou plusieurs grandeurs qui caractérisent le fluide et/ou un transport du fluide lors du remplissage, et
dans laquelle l'installation (100) présente un système de calcul (130) selon la revendication 12.

14. Programme informatique comprenant des instructions qui, lors de la mise en œuvre du programme par un système de calcul (1300), déclenchent que ce dernier mette en œuvre le procédé selon l'une des revendications 1 à 11.

15. Support de données lisible par ordinateur sur lequel est stocké le programme informatique selon la revendication 14.
